# FASCICULE DE BREVET EUROPEEN

(11) **EP 0 410 912 B1**
(45) Date de publication et mention de la délivrance du brevet: **30.11.1994**
(21) Numéro de dépôt: 90420356.9
(22) Date de dépôt: 24.07.1990
(51) Int. Cl.: A01N 1/00

(54) **Liquide thanatopraxique**
Konservierungsflüssigkeit
Preservative liquid

(30) Priorité: 26.07.1989 FR 8910325
(43) Date de publication de la demande: 30.01.1991
(73) Titulaire: Bizet, André, F-69006 Lyon (FR); Mouzet, Jacques, F-69890 La Tour de Salvagny (FR)
(72) Inventeur: Elles, Jean, F-69007 Lyon (FR)
(74) Mandataire: Monnier, Guy

(56) Documents cités:
- GB-A- 17 934
- US-A- 1 870 123

## Description

On sait que ces produits de conservation sont généralement à base de formol et qu'ils sont dans un état chimique liquide pour être injectés dans les cadavres. De tels produits comprennent certains inconvénients, en ce sens qu'ils provoquent une modification irréversible des tissus et, par effet de tannage, s'opposent durablement à la disparition des parties consomptibles du corps humain. Il en résulte dans le temps un risque d'encombrement des cimetières dû à la trop longue conservation des tissus, ce qui va à l'encontre des législations qui prévoient un délai relativement court entre deux inhumations pour la réutilisation des terrains d'ensevelissement dans les carrés généraux.

Ces produits comportent également l'inconvénient de provoquer une rigidité générale chez les cadavres traités, ce qui pose un problème lorsqu'ils sont utilisés par les Facultés de Médecine à titre de pièces anatomiques mises à la disposition de l'enseignement de la médecine.

On notera encore que les cadavres traités présentent une toxicité de nature cancérigène, soit par contact avec l'épiderme, soit par les vapeurs émises. Le formol, par contact ou en vapeur, offre de sérieux dangers d'allergie et des risques d'affections respiratoires.

Les inconvénients énoncés ci-dessus ont suscité la recherche de produits non toxiques et exempts de formol ou de dérivés phénoliques afin d'éviter les modifications irréversibles des tissus, les effets de tannages et les risques d'apparition d'une rigidité cadavérique. Mais le produit visé doit offrir, pendant un temps suffisant, des propriétés bactéricides et fongicides qui doivent disparaître pour faire place aux effets habituels de la lyse cadavérique, en permettant ainsi une rotation convenable des terrains d'inhumation dans les cimetières.

C'est à ces objectifs qu'entend plus spécialement répondre la présente invention, laquelle a plus particulièrement pour objet un liquide thanatopraxique ne renfermant pas de formol ou autre produit tannant.

A cet effet, le liquide thanatopraxique suivant l'invention est caractérisé en ce qu'il renferme, en solution dans de l'eau, un mélange contenant une combinaison d'un dérivé amido-acide halogène N- substitué et de composés N.S hétérocycliques, une combinaison d'acétals acycliques, de composés d'azote aliphatiques et de composés N.S. hétérocycliques, et un dérivé d'isothiazolinone.

Le produit obtenu possède une action désinfectante temporaire dont la durée est déterminée par sa concentration.

La composition qui semble avoir donné les meilleurs résultats est la suivante qui comprend pour 1 kg d'eau :
- 2 % d'une combinaison d'un dérivé amido-acide halogène N-substitué et de composés N.S. hétérocycliques ;
- 2 % d'une combinaison d'acétals acycliques, de composés d'azote aliphatiques et de composés N.S. hétérocycliques ;
- 1 % d'un dérivé d'isothiazolinone ;
- 1 % de chlorure d'ammonium (NH4Cl) ;
- 2 % de glycérol ;
- 0,7 % de chlorure de sodium (NaCl) ;
- 2% de rouge de méthyle.

Le produit ainsi défini ne comprend ni formol, ni dérivés phénoliques et ne possède aucune propriété tannante.

De plus il se trouve à l'état liquide permettant d'être injecté à différents endroits du cadavre.

## Revendications

1. Liquide thanatopraxique introduit par injection dans des cadavres pour retarder temporairement la lyse cadavérique, caractérisé en ce qu'il renferme, en solution dans de l'eau, un mélange contenant une combinaison d'un dérivé amido-acide halogène N- substitué et de composés N.S. heterocycliques, une combinaison d'acétals acycliques, de composés d'azote aliphatiques et de composés N.S. hétérocycliques, et un dérivé d'isothiazolinone.

2. Liquide thanatopraxique suivant la revendication 1, caractérisé en ce qu'il renferme pour 1kg. d'eau :
- 2 % d'une combinaison d'un dérivé amido-acide halogène N-substitué et de composés N.S. hétérocycliques ;
- 2 % d'une combinaison d'acétals acycliques, de composés d'azote aliphatiques et de composés N.S. hétérocycliques ;
- 1 % d'un dérivé d'isothiazolinone ;
- 1 % de chlorure d'ammonium (NH4Cl) ;
- 2 % de glycérol ;
- 0,7 % de chlorure de sodium (NaCl) ;
- 2% de rouge de méthyle.

## Claims

1. Preservative liquid introduced by injection into cadavers to delay temporarily cadaveric lysis, characterised in that it comprises, in solution in water, a mixture containing a combination of an N-substituted halogen derivative of an amido-acid and N.S heterocyclic compounds, a combination of acyclic acetals, aliphatic nitrogen compounds and N.S. heterocyclic compounds, and an isothiazolinone derivative.

2. Preservative liquid according to Claim 1, characterised in that it comprises for 1 kg. of water:-
- 2% of a combination of an N-substituted halogen derivative of an amido-acid and N.S. heterocyclic compounds;
- 2% of a combination of acyclic acetals, aliphatic nitrogen compounds and N.S. heterocyclic compounds;
- 1% of an isothiazolinone derivative;
- 1% of ammonium chloride (NH₄Cl);
- 2% of glycerol;
- 0.7% of sodium chloride (NaCl);
- 2% of methyl red.

## Patentansprüche

1. Konservierungsflüssigkeit, die durch Injektion in Leichen eingeführt wird, um vorübergehend die Leichenzersetzung zu verzögern, dadurch gekennzeichnet, daß sie in wäßriger Lösung eine Mischung, umfassend eine Kombination aus einem Halogen N-substituierten Säureamid-Derivat und aus N,S-heterocyclischen Verbindungen, eine Kombination aus acyclischen Acetalen, aliphatischen Azoverbindungen und aus N,S-heterocyclischen Verbindungen und ein Isothiazolinonderivat, umfaßt.

2. Konservierungsflüssigkeit nach Anspruch 1, dadurch gekennzeichnet, daß sie auf 1 kg Wasser
- 2 % einer Kombination aus einem Halogen N-substituierten Säureamid-Derivat und aus N,S-heterocyclischen Verbindungen;
- 2 % einer Kombination aus acyclischen Acetalen, aliphatischen Stickstoffverbindungen und N,S-heterocyclischen Verbindungen;
- 1 % eines Isothiazolinonderivats;
- 1 % Ammoniumchlorid (NH₄Cl);
- 2 % Glyzerin;
- 0,7 % Natriumchlorid (NaCl);
- 2 % Methylrot
umfaßt.
